# EUROPÄISCHE PATENTSCHRIFT

(11) **EP 3 951 780 B1**
(45) Veröffentlichungstag und Bekanntmachung des Hinweises auf die Patenterteilung: **14.02.2024**
(21) Anmeldenummer: 21185405.4
(22) Anmeldetag: 13.07.2021
(51) Int. Cl.: G10L 25/78, H04R 1/10, H04R 25/00, G10K 11/178

(54) **VERFAHREN ZUM BETRIEB EINES HÖRGERÄTS UND HÖRGERÄT**
HEARING AID AND METHOD FOR OPERATING A HEARING AID
PROCÉDÉ DE FONCTIONNEMENT D'UN APPAREIL AUDITIF ET APPAREIL AUDITIF

(30) Priorität: 05.08.2020 DE 102020209906
(43) Veröffentlichungstag der Anmeldung: 09.02.2022
(73) Patentinhaber: Sivantos Pte. Ltd., Singapore 539775 (SG)
(72) Erfinder: BEST, Sebastian, 91054 Erlangen (DE)
(74) Vertreter: FDST Patentanwälte

(56) Entgegenhaltungen:
- WO-A1-02/17838
- DE-B4-102005 032 274
- US-A1- 2010 119 077
- US-A1- 2019 088 245

## Beschreibung

Die Erfindung betrifft ein Verfahren zum Betrieb eines Hörgeräts sowie ein entsprechendes Hörgerät.

Ein Hörgerät dient der Ausgabe von Geräuschen an einen Nutzer des Hörgeräts. Der Nutzer trägt das Hörgerät hierzu am oder im Ohr. Zur Ausgabe von Geräuschen weist das Hörgerät einen Hörer auf sowie wenigstens ein Mikrofon, um Geräusche aus der Umgebung aufzunehmen und diese dann an den Nutzer auszugeben. Die Geräusche werden dabei von dem Hörgerät zusätzlich modifiziert, um einen Hörverlust des Nutzers auszugleichen. Das Hörgerät wird daher auch als Hörhilfegeräte bezeichnet.

Ein Hörgerät kann zusätzlich eine aktive Geräuschunterdrückung durchführen, dies wird auch als "active noise cancellation" bezeichnet, kurz: ANC. Mittels ANC werden Geräusche aus der Umgebung unterdrückt, speziell Störgeräusche, sodass sich für den Nutzer eine beruhigte Hörsituation ergibt. Bei einer ANC werden typischerweise Geräusche unterdrückt, welche aus der Umgebung von außen in den Gehörgang des Nutzers gelangen. Das Konzept der ANC ist aber auch auf Geräusch im Gehörgang anwendbar, dies wird dann als "active occlusion reduction" bezeichnet, kurz: AOR. Auch mittels AOR wird demnach eine beruhigte Hörsituation hergestellt, allerdings werden hierbei im Gegensatz zur zuvor genannten Unterdrückung von Störgeräuschen von außen gerade solche Geräusche unterdrückt, welche durch den Nutzer selbst entstehen oder welche aus stehenden Wellen im Gehörgang resultieren. Dies ist besonders dann der Fall, wenn der Gehörgang durch ein Ohrstück gegenüber der Umgebung verschlossen ist. Die AOR ist demnach vorrangig eine interne Geräuschunterdrückung, welche Störgeräusche im Gehörgang unterdrückt, wohingegen mit ANC typischerweise eine externe Geräuschunterdrückung gemeint ist, welche Störgeräusche von außerhalb des Gehörgangs unterdrückt. Eine AOR wird zuweilen auch unter den Begriff ANC summiert. Die tatsächliche Geräuschunterdrückung erfolgt in beiden Fällen innerhalb des Gehörgangs durch Erzeugung eines invertierten Signals, welches sich mit dem Störgeräusch akustisch im Gehörgang überlagert und dann das Störgeräusch wenigstens teilweise auslöscht. Insgesamt werden in beiden Fällen Störgeräusche, d.h. solche Geräusche, welche vom Nutzer üblicherweise als störend empfunden werden, unterdrückt und dadurch eine beruhigte Hörsituation hergestellt.

Eine aktive Geräuschunterdrückung im Kontext eines Hörgeräts ist beispielsweise beschrieben in EP 1 690 252 B1, EP 2 023 664 B1, DE 10 2008 015 264 A1, DE 10 2009 010 892 B4, EP 2 309 778 B1, EP 2 405 674 B1.

Zusätzlich wird verwiesen auf US 20101119077 A1, DE 10 2005 032274 B4 und US 20191088245 A1. WO 02/17838 A1 offenbart einen Gehörschutzstöpsel mit Verifikationsvorrichtung.

Ein allgemeines Problem bei Hörgeräten, speziell zur geschlossenen Versorgung, ist der sogenannte Okklusionseffekt. Durch das teilweise oder vollständige Abschließen des Gehörgangs beim Tragen des Hörgeräts können im Betrieb im Gehörgang stehende Wellen ausgebildet werden. Die eigene Stimme des Nutzers des Hörgeräts wird dann vom Nutzer selbst regelmäßig verzerrt wahrgenommen, was typischerweise als störend empfunden wird. Eine AOR schafft hier Abhilfe, indem der Okklusionseffekt reduziert wird. Allerdings ist dies oftmals nicht ausreichend, um einen natürlichen Klang der eigenen Stimme herzustellen. Hinzu kommt, dass die eigene Stimme auch aufgrund der Verstärkung durch das Hörgerät selbst mitunter verzerrt wird und entsprechend unnatürlich klingt.

Vor diesem Hintergrund ist es eine Aufgabe der Erfindung, ein verbessertes Verfahren zum Betrieb eines Hörgeräts anzugeben. Bei dem Verfahren soll insbesondere die Wahrnehmung der eigenen Stimme durch einen Nutzer des Hörgeräts verbessert werden. Die eigene Stimme soll insbesondere derart verarbeitet werden, dass diese vom Nutzer des Hörgeräts als möglichst wenig störend wahrgenommen wird. Weiter soll ein entsprechendes Hörgerät angegeben werden, welches zur Durchführung des Verfahrens geeignet ist.

Die Aufgabe wird erfindungsgemäß gelöst durch ein Verfahren mit den Merkmalen gemäß Anspruch 1 sowie durch ein Hörgerät mit den Merkmalen gemäß Anspruch 12. Vorteilhafte Ausgestaltungen, Weiterbildungen und Varianten sind Gegenstand der Unteransprüche. Die Ausführungen im Zusammenhang mit dem Verfahren gelten sinngemäß auch für das Hörgerät und umgekehrt. Sofern nachfolgend Verfahrensschritte des Verfahrens beschrieben werden, ergeben sich vorteilhafte Ausgestaltungen für das Hörgerät insbesondere dadurch, dass dieses ausgebildet ist, einen oder mehrere dieser Verfahrensschritte auszuführen.

Das Verfahren dient zum Betrieb eines Hörgeräts, insbesondere beim bestimmungsgemäßen Gebrauch des Hörgeräts, d.h. während das Hörgerät zur Verwendung von einem Nutzer getragen wird. Das Hörgerät weist eine ANC-Einheit auf, wobei unter ANC eine aktive Geräuschunterdrückung verstanden wird, auch als "active noise cancellation" bezeichnet.

Die ANC-Einheit weist eine Feedforward-Einheit auf, welche ein Feedforward-Signal ausgibt, zur Unterdrückung von äußeren Störgeräuschen, welche insbesondere bei bestimmungsgemäßem Gebrauch von außen in einen Gehörgang des Nutzers des Hörgeräts eindringen, insbesondere an einem Ohrstück des Hörgeräts vorbei. Weiter weist die ANC-Einheit eine Feedback-Einheit auf, welche ein Feedback-Signal ausgibt, zur Unterdrückung von inneren Störgeräuschen, welche innerhalb des Gehörgangs vorliegen. Innere Störgeräusche sind insbesondere stehende Wellen im Gehörgang aufgrund einer Okklusion sowie vom Nutzer selbst verursachte Geräusche, sogenannte Eigengeräusche, darunter insbesondere auch die eigene Stimme des Nutzers, welche beispielsweise als Körperschall in den Gehörgang übertragen wird. Die Feedback-Einheit wird auch als AOR-Einheit bezeichnet, da diese effektiv eine AOR durchführt, d.h. eine aktive Okklusionsreduktion, auch als "active occlusion reduction" bezeichnet. Das Feedforward-Signal und das Feedback-Signal werden allgemein jeweils auch als Korrektursignal bezeichnet. Beide Korrektursignale sind insbesondere elektrische Signale, welche einem Hörer des Hörgeräts zugeführt werden und vom Hörer in Schall umgewandelt werden. Dieser Schall ist dann sogenannter Anti-Schall, welcher die Störgeräusche bei Überlagerung im Gehörgang ganz oder teilweise auslöscht, d.h. unterdrückt. Eine Geräuschunterdrückung erfolgt hierbei rein akustisch und gerade nicht auf elektrischer Ebene.

Da die ANC-Einheit sowohl eine Feedforward-Einheit als auch eine Feedback-Einheit aufweist, wird die ANC-Einheit auch als hybride ANC-Einheit bezeichnet, welche entsprechend eine hybride ANC durchführt. Dabei werden Störgeräusche unterschiedlicher Herkunft unterdrückt, nämlich einerseits innere Störgeräusche und andererseits äußere Störgeräusche. Die Feedback-Einheit und die Feedforward-Einheit werden insbesondere parallel zueinander betrieben und sind vorzugsweise jeweils eigenständige Untereinheiten der ANC-Einheit. Insbesondere erhalten die Feedforward-Einheit und die Feedback-Einheit voneinander unabhängige Eingangssignale und geben jeweils ein eigenes Korrektursignal aus.

Das Hörgerät dient allgemein der Ausgabe von Geräuschen an den Nutzer des Hörgeräts und speziell vorzugsweise zum Ausgleich eines Hördefizits des Nutzers, vorzugsweise eines hörgeschädigten Nutzers. Insbesondere hierzu weist das Hörgerät eine Signalverarbeitungseinheit auf, welche eine einstellbare Verstärkung aufweist, d.h. eine Verstärkungseinheit mit einem einstellbaren Verstärkungsfaktor. Sofern als nachfolgend "die Verstärkung eingestellt/angepasst/ reduziert/erhöht wird" oder dergleichen, meint dies, dass der Verstärkungsfaktor der Verstärkungseinheit eingestellt/angepasst/reduziert/erhöht wird oder dergleichen.

Weiter verstärkt die Signalverarbeitungseinheit ein Eingangssignal des Hörgeräts und gibt dieses als verstärktes Signal aus. Das Eingangssignal ist ein elektrisches Signal und wird insbesondere mittels eines Mikrofons des Hörgeräts erzeugt, indem das Mikrofon Schall aus der Umgebung umwandelt. Die Verstärkung ist entweder dieselbe für sämtliche Frequenzbereiche, welche von der Signalverarbeitungseinheit verarbeitet werden, oder frequenzabhängig und dann unterschiedlich für verschiedene Frequenzbereiche. Die Signalverarbeitungseinheit und deren einstellbare Verstärkung realisieren beim bestimmungsgemäßen Gebrauch des Hörgeräts insbesondere dessen eigentliche Hörgerätefunktionalität, nämlich eine Modifikation des Eingangssignals abhängig von einem individuellen Hörprofil, auch Audiogramm, des Nutzers. Dadurch wird im Betrieb insbesondere ein Hördefizit des Nutzers ausgeglichen.

Das verstärkte Signal und auch die beiden Korrektursignale werden insbesondere über einen Hörer des Hörgeräts ausgegeben. Der Hörer wandelt dabei das verstärkte Signal und die beiden Korrektursignale in Schall um. Die Korrektursignale sind nun von der ANC-Einheit insbesondere derart erzeugt worden, dass die zugehörigen Schallsignale sich im Gehörgang mit den Störgeräuschen destruktiv überlagern, wodurch die Störgeräusche unterdrückt werden.

Die Signalverarbeitungseinheit und die ANC-Einheit sind vorzugsweise Teile einer Steuereinheit des Hörgeräts. Die Steuereinheit wird auch als Controller bezeichnet und ist beispielsweise ein Mikrocontroller oder eine ASIC oder eine Kombination hiervon. Die Steuereinheit ist beispielsweise in ein Gehäuse des Hörgeräts integriert und das Gehäuse wird beim bestimmungsgemäßen Gebrauch je nach Hörgerätetyp vom Nutzer am oder im Ohr getragen.

Ein wichtiger Aspekt ist vorliegend, dass das Feedback-Signal als ein Maß für die eigene Stimme des Nutzers verwendet wird und die Verstärkung der Signalverarbeitungseinheit abhängig von dem Feedback-Signal und somit auch abhängig von der eigenen Stimme eingestellt wird. Dadurch wird dann insbesondere auch das Eingangssignal abhängig vom Feedback-Signal und ebenfalls abhängig von der eigenen Stimme verstärkt. Entsprechend ist in dem Hörgerät ein Signalpfad ausgebildet, welcher von der Feedback-Einheit zur Signalverarbeitungseinheit führt und über welchen das Feedback-Signal oder ein davon abgeleitetes Signal der Signalverarbeitungseinheit zugeführt wird, um diese entsprechend abhängig vom Feedback-Signal und der eigenen Stimme anzusteuern. Das Feedback-Signal dient somit insbesondere zur Erkennung der eigenen Stimme und stellt für diese ein quantitatives und/oder qualitatives Maß dar (darunter wird vorzugsweise auch verstanden, dass ein solches Maß aus dem Feedback-Signal zumindest abgeleitet wird). Die Verstärkung der Signalverarbeitungseinheit und die Geräuschunterdrückung durch die ANC-Einheit sind somit allgemein miteinander verknüpft. Die Signalverarbeitungseinheit und die ANC-Einheit sind miteinander gekoppelt und somit vorteilhaft synchronisiert, d.h. eine Änderung im Betrieb der ANC-Einheit wird insbesondere direkt genutzt um auch den Betrieb der Signalverarbeitungseinheit zu ändern. Die Signalverarbeitungseinheit wird demnach mittelbar oder unmittelbar von der Feedback-Einheit angesteuert, sodass die Verstärkung abhängig vom Feedback-Signal und somit auch abhängig von der eigenen Stimme eingestellt wird. Zusätzlich wird die Verstärkung in einer geeigneten Ausgestaltung auch noch abhängig von einem anderen Signal oder Parameter eingestellt, dies ist hier jedoch von untergeordneter Bedeutung.

Der genannten Einstellung der Verstärkung abhängig von der eigenen Stimme, welche mit dem Feedback-Signal erkannt wird, liegt insbesondere die folgende Überlegung zugrunde: einerseits werden aufgrund der hybriden ANC im Gehörgang mögliche äußere Störgeräusche bereits durch die Feedforward-Einheit ganz oder zumindest teilweise unterdrückt, andererseits wird Schall im Gehörgang für die Feedback-Einheit aufgenommen, um eine AOR durchzuführen. Da die äußeren Störgeräusche nun unterdrückt werden, werden im Gehörgang dann überwiegend oder sogar ausschließlich innere Störgeräusche aufgenommen. In Phasen eigener Sprechaktivität, d.h. sobald der Nutzer selbst spricht, wird dessen eigene Stimme zum einen nach außen in die Umgebung abgegeben und ist dann regelmäßig auch im Eingangssignal enthalten, und wird zum anderen insbesondere als Körperschall in den Gehörgang übertragen und liegt dann dort als inneres Störgeräusch vor. Zugleich kann die eigene Stimme grundsätzlich auch von außen in den Gehörgang gelangen und liegt dann zusätzlich als äußeres Störgeräusch vor. Für die eigene Stimme existieren somit grundsätzlich drei Pfade in den Gehörgang. Zwei der Pfade sind akustische Pfade, nämlich einmal von außen und einmal von innen in den Gehörgang. Der dritte Pfad ist gemischt akustisch-elektrisch, nämlich von außen über das Mikrofon in die Signalverarbeitung und dann über den Hörer in den Gehörgang.

Aufgrund der Unterdrückung äußerer Störgeräusche durch die Feedforward-Einheit wird aber vorliegend davon ausgegangen, dass die eigene Stimme nun einen wesentlichen Anteil der noch verbleibenden, inneren Störgeräusche bildet, sodass das Feedback-Signal vorteilhaft zur Erkennung der eigenen Stimme und dabei insbesondere als Maß für die eigene Stimme verwendbar ist, d.h. insbesondere als Maß für das Vorliegen der eigenen Stimme (d.h. quantitatives Maß) oder sogar als Maß für die Lautstärke (auch: Pegel oder Amplitude) der eigenen Stimme (d.h. qualitatives Maß). Dieses Maß wird nun auch tatsächlich zur Steuerung der Signalverarbeitungseinheit verwendet, sodass diese im Ergebnis abhängig von der eigenen Stimme gesteuert wird, genauer gesagt: sodass die Verstärkung abhängig von der eigenen Stimme eingestellt wird. Damit ist es vorteilhaft möglich, gezielt und vorteilhaft auch besonders zeitnah in Phasen eigener Sprechaktivität, die eigene Stimme zu erkennen und die Verarbeitung des Eingangssignals in der Signalverarbeitung anzupassen und somit auch die Verarbeitung und letztendlich auch die Ausgabe der eigenen Stimme. Die eigene Stimme, welche über den inneren Pfad als inneres Störgeräusch in den Gehörgang gelangt, wird demnach genutzt, um die Verstärkung der eigenen Stimme im akustisch-elektrischen dritten Pfad anzupassen. Auf diese Weise lässt sich die Verarbeitung der eigenen Stimme verbessern, insbesondere mit dem Ziel eine natürlichere Wahrnehmung der eigenen Stimme zu erzielen oder diese zumindest derart auszugeben, dass diese als weniger störend empfunden wird. Um dies zu erreichen unterdrückt in einer bevorzugten Ausgestaltung die Feedforward-Einheit im Falle einer eigenen Sprechaktivität des Nutzers die äußeren Störgeräusche derart, dass im Feedback-Signal überwiegend die eigene Stimme des Nutzers enthalten ist, sodass dann die Verstärkung abhängig von der eigenen Stimme eingestellt wird. Insgesamt wird dann in Phasen eigener Sprechaktivität die eigene Stimme vorteilhaft in allen drei Pfaden modifiziert, insbesondere unterdrückt, nämlich in den akustischen Pfaden mittels der ANC-Einheit und synchron dazu im akustisch-elektrischen Pfad mittels der Signalverarbeitungseinheit. Das Feedback-Signal dient hierbei insbesondere als Maß für die Sprechaktivität des Nutzers.

In einer vorteilhaften Ausgestaltung weist das Feedback-Signal eine Amplitude auf und mit steigender Amplitude wird die Verstärkung reduziert. Insbesondere wird dadurch bei lauterer eigener Stimme das Eingangssignal weniger verstärkt und damit auch die eigene Stimme im Eingangssignal, sodass für den Nutzer potentiell die Wahrnehmung der eigenen Stimme verbessert wird. Das Feedback-Signal dient demnach insbesondere derart als Maß für die eigene Stimme, dass die Amplitude des Feedback-Signals die Lautstärke der eigenen Stimme angibt. Dies hat insbesondere zur Folge, dass die ANC-Einheit die Verstärkung unterschiedlich einstellt, je nachdem, ob der Nutzer selbst spricht oder nicht. In Phasen eigener Sprechaktivität ist die Amplitude größer als in Phasen ohne eigene Sprechaktivität, z.B. wenn lediglich andere Störgeräusche wie z.B. Rauschen vorhanden sind. Dadurch wird in Phasen eigener Sprechaktivität die Verstärkung geringer eingestellt als in Phasen ohne eigene Sprechaktivität und somit wird gezielt in Phasen eigener Sprechaktivität die Lautstärke der eigenen Stimme im Eingangssignal reduziert, während in Phasen ohne eigene Sprechaktivität eine größere Verstärkung eingestellt wird, um eine möglichst optimale Verständlichkeit von Geräuschen aus der Umgebung zu realisieren.

Wie aus den bisherigen Ausführungen deutlich wird, ist es grundsätzlich möglich, aufgrund der Unterdrückung von äußeren Störgeräuschen mittels des Feedforward-Signals dann Phasen eigener Sprechaktivität anhand des Feedback-Signals zu identifizieren, beispielsweise wenn das Feedback-Signal einen vordefinierten Schwellwert überschreitet. Daher wird in einer vorteilhaften Ausgestaltung anhand des Feedback-Signals, vorzugsweise anhand dessen Amplitude, zwischen Phasen eigener Sprechaktivität und Phasen ohne eigene Sprechaktivität unterschieden, sodass mittels der ANC-Einheit zugleich eine Eigenstimmenerkennung durchgeführt wird. Die ANC-Einheit wird somit zur Eigenstimmendetektion verwendet und stellt insofern vorteilhaft auch eine OVD-Einheit dar, d.h. eine Eigenstimmenerkennungseinheit, wobei OVD für "own voice detection" steht. Beispielsweise wird oberhalb eines vordefinierten Schwellwerts für die Amplitude eine Phase eigener Sprechaktivität angenommen und unterhalb des Schwellwert analog eine Phase ohne eigene Sprechaktivität.

Grundsätzlich ist auch denkbar, die eigene Stimme z.B. mittels eines räumlichen Filters oder eines Richtmikrofons aufzunehmen, d.h. gezielt Schall aus einer bestimmten Richtung aufzunehmen und dann davon auszugehen, dass es sich hierbei aufgrund der Richtung um die eigene Stimme handelt. Die hier beschriebene Eigenstimmendetektion stellt diesbezüglich eine besonders einfache Alternative dar und ist zumindest insofern vorteilhaft, als dass vorliegend die ANC-Einheit sozusagen eine Doppelfunktion erfüllt, nämlich zum einen eine aktive Geräuschunterdrückung und zum anderen eine Eigenstimmendetektion. Eine separate OVD-Einheit ist somit entbehrlich.

Die ANC-Einheit, speziell in deren Funktion als OVD-Einheit, wird dann vorteilhafterweise zum Einstellen der Verstärkung verwendet, um diese in Phasen eigener Sprechaktivität zu reduzieren und dadurch das Eingangssignal und wenigstens die darin enthaltene eigene Stimme abzuschwächen. Darüber hinaus bildet in einer vorteilhaften Ausgestaltung die ANC-Einheit in Kombination mit der Signalverarbeitungseinheit eine OVP-Einheit, wobei OVP für "own voice processing" steht, d.h. Eigenstimmenverarbeitung. Die OVP-Einheit erkennt einerseits die eigene Stimme anhand des Feedback-Signals der Feedback-Einheit und verarbeitet andererseits abhängig davon die eigene Stimme mittels der Signalverarbeitungseinheit, da ja deren Verstärkung abhängig vom Feedback-Signal eingestellt wird. Eine separate OVP-Einheit ist dann nicht mehr notwendig. Entsprechend ist das Hörgerät vorzugsweise frei von einer separaten OVP-Einheit zur Eigenstimmendetektion und -verarbeitung.

Vorliegend wird die Verstärkung frequenzabhängig eingestellt, nämlich lediglich in solchen Frequenzbereichen, in welchen die eigene Stimme liegt. Auf diese Weise wird im Eingangssignal gezielt die eigene Stimme modifiziert, mit dem Ziel einer möglichst natürlichen Ausgabe der eigenen Stimme an den Nutzer. Allgemein liegt die Stimme eines Menschen grob zwischen Frequenzen von 100 Hz und 10 kHz, die tatsächlichen Frequenzbereiche der eigenen Stimme eines bestimmten Nutzers sind jedoch individuell und werden zweckmäßigerweise mittels einer geeigneten Messung bestimmt.

Die Feedback-Einheit weist in einer möglichen Ausgestaltung einen Arbeitsbereich auf, welcher lediglich Frequenzen bis zu einer Grenzfrequenz umfasst, welche insbesondere vordefiniert ist und z.B. in einem Speicher des Hörgeräts hinterlegt ist. Die Grenzfrequenz beträgt vorzugsweise 1 kHz. Nach unten hin ist der Arbeitsbereich insbesondere begrenzt durch eine Untergrenze des menschlichen Hörbereichs, typischerweise bei etwa 20 Hz. Die Verstärkung wird jedoch bevorzugterweise auch für Frequenzen oberhalb der Grenzfrequenz abhängig vom Feedback-Signal eingestellt. Diese Frequenzen sind nach oben hin insbesondere begrenzt durch eine Obergrenze des menschlichen Hörbereichs, typischerweise bei etwa 20 kHz. Mit anderen Worten: die Steuerung der Verstärkung beschränkt sich gerade nicht lediglich auf solche Bereiche, welche auch von der Feedback-Einheit erfasst werden. Dem liegt die Überlegung zugrunde, dass Sprache allgemein nicht auf niedrige Frequenzen, d.h. insbesondere Frequenzen bis zu 1 kHz, beschränkt ist. Eine ANC-Einheit ist jedoch üblicherweise lediglich für solche niedrigen Frequenzen ausgelegt, da hier die meisten Störgeräusch zu erwarten sind und gerade Sprache, vor allem eine fremde Stimme, grundsätzlich eher nicht als Störgeräusch angesehen wird und auch nicht unbedingt unterdrückt werden soll. Gerade im Falle der eigenen Stimme ist eine Unterdrückung jedoch für eine natürlichere Wahrnehmung wünschenswert. Vorliegend wird nun ausgenutzt, dass bei einem Arbeitsbereich bis zu einer bestimmten Grenzfrequenz, insbesondere 1 kHz, noch zumindest Teile der eigenen Stimme von der Feedback-Einheit erfasst werden, sodass das Feedback-Signal trotzdem als hinreichendes Maß für das Vorliegend oder die Lautstärke der eigenen Stimme und somit zur Eigenstimmendetektion verwendbar ist. Dabei ist die Grenzfrequenz selbstverständlich derart gewählt, dass der Arbeitsbereich noch zumindest einen Teil der Frequenzen der eigenen Stimme enthält. Eine Unterdrückung der eigenen Stimme erfolgt dann aber vorteilhafterweise auch auf denjenigen Frequenzen, welche von der eigenen Stimme umfasst sind, jedoch nicht vom Arbeitsbereich der Feedback-Einheit, um eine möglichst optimale Verarbeitung der eigenen Stimme in der Signalverarbeitungseinheit zu erzielen und auf diese Weise einen natürlicheren Klang der eigenen Stimme zu erzeugen.

Das Hörgerät weist zumindest ein Mikrofon auf, mit welchem das Eingangssignal erzeugt wird, indem das Mikrofon Schall aus der Umgebung aufnimmt und in ein elektrisches Signal umwandelt. Dieses Mikrofon ist vorzugsweise ein äußeres Mikrofon. Das entsprechende Eingangssignal wird zweckmäßigerweise sowohl der Signalverarbeitungseinheit als auch der Feedforward-Einheit zugeführt, sodass in einer geeigneten Ausgestaltung das Hörgerät ein äußeres Mikrofon aufweist, welches das Eingangssignal erzeugt, welches dann auch der Feedforward-Einheit zugeführt wird, um das Feedforward-Signal zu erzeugen. Unter einem "äußeren" Mikrofon wird ein Mikrofon verstanden, welches beim bestimmungsgemäßen Gebrauch des Hörgeräts derart positioniert ist, dass von dem Mikrofon ausschließlich oder überwiegend Schall aus der Umgebung des Nutzers aufgenommen wird. Hierzu ist das äußere Mikrofon generell nach außen gerichtet und typischerweise auch außerhalb des Gehörgangs des Nutzers positioniert. Alternativ wir das Eingangssignal für die Feedforward-Einheit mittels eines anderen, zusätzlichen Mikrofons des Hörgeräts erzeugt, sodass zwei Eingangssignale erzeugt werden, eines für die Signalverarbeitungseinheit und eines für die Feedforward-Einheit. In jedem Fall ist das Mikrofon, welches ein Eingangssignal für die Feedforward-Einheit erzeugt, aber ein äußeres Mikrofon, also bezüglich des Nutzers nach außen gerichtet, um entsprechend äußere Störgeräusche in der Umgebung aufzunehmen.

Auch die Feedback-Einheit erhält ein Eingangssignal, welches mittels eines Mikrofons des Hörgeräts erzeugt wird. Allerdings unterscheiden sich die Eingangssignale für die Feedforward-Einheit und die Feedback-Einheit, da diese Einheiten ja unterschiedliche Störgeräusche unterdrücken sollen, sodass die Mikrofone für die unterschiedlichen Eingangssignale entsprechend unterschiedlich positioniert sind. In einer zweckmäßigen Ausgestaltung ist das zuvor beschriebene Eingangssignal für die Signalverarbeitungseinheit und gegebenenfalls auch für die Feedforward-Einheit ein erstes Eingangssignal und das Hörgerät weist ein inneres Mikrofon auf, welches ein zweites Eingangssignal erzeugt, welches der Feedback-Einheit zugeführt wird, um das Feedback-Signal zu erzeugen. Im Gegensatz zu einem äußeren Mikrofon wird unter einem "inneren" Mikrofon ein Mikrofon verstanden, welches beim bestimmungsgemäßen Gebrauch des Hörgeräts derart positioniert ist, dass von dem Mikrofon ausschließlich oder überwiegend Schall aus dem Gehörgang des Nutzers aufgenommen wird. Hierzu ist das innere Mikrofon typischerweise nach innen und in den Gehörgang hinein gerichtet und/oder innerhalb des Gehörgangs des Nutzers positioniert.

Ein inneres und ein äußeres Mikrofon unterscheiden sich demnach insbesondere in deren Anordnung relativ zum Gehörgang des Nutzers beim bestimmungsgemä-ßen Gebrauch. Die Grenze zwischen "innen" und "außen" wird insbesondere durch ein Ohrstück des Hörgeräts definiert, welches beim bestimmungsgemäßen Gebrauch im Gehörgang einsitzt und in diesem ein Volumen begrenzt, welches dann innen liegt und durch das Ohrstück, die Gehörgangswand und das Trommelfell begrenzt ist. Im Gegensatz dazu liegt die Umgebung auf der anderen Seite des Ohrstücks, nämlich außen. Die Ausgabe von Schall durch das Hörgerät erfolgt in beiden Fällen nach innen hin, also in den Gehörgang hinein, insbesondere indem ein Hörer hierfür nach innen in den Gehörgang gerichtet ist.

Vorzugsweise ist das Hörgerät zur geschlossenen Versorgung ausgebildet und weist hierzu ein Ohrstück auf, zum Abschließen des Gehörgangs während des bestimmungsgemäßen Gebrauchs des Hörgeräts. Das Ohrstück ist beispielsweise ein sogenannter Dome oder eine Otoplastik. In einer möglichen Ausgestaltung weist das Ohrstück einen sogenannten Vent auf, d.h. einen Kanal, welcher von innen nach außen führt, wobei der Gehörgang dann aber immer noch überwiegend abgeschlossen ist.

In einer geeigneten Ausgestaltung werden das modifizierte Signal, das Feedback-Signal und das Feedforward-Signal miteinander zu einem Ausgangssignal kombiniert, welches dann über einen Hörer des Hörgeräts ausgegeben wird. Beispielsweise werden das modifizierte Signal, das Feedback-Signal und das Feedforward-Signal in einem Summierer miteinander addiert. Das Ausgangssignal enthält dann einerseits das von der Signalverarbeitung ausgegebene verstärkte Signal sowie die Korrektursignale zur Unterdrückung von Störgeräuschen.

Zweckmäßigerweise wird das Ausgangssignal mit einem Zusatzverstärker des Hörgeräts verstärkt, bevor das Ausgangssignal über den Hörer ausgegeben wird. Das modifizierte Signal, das Feedback-Signal und das Feedforward-Signal werden demnach gemeinsam sozusagen nachverstärkt, um den Hörer geeignet anzusteuern.

Ein Hörgerät gemäß Anspruch 12 weist eine Steuereinheit auf, welche ausgebildet ist, ein Verfahren nach einem der Ansprüche 1 bis 11 auszuführen. Eine geeignete Steuereinheit wurde oben bereits erwähnt.

Die Aufgabe wird insbesondere auch gelöst durch ein Verfahren zum Betrieb eines Hörgeräts, wobei das Hörgerät eine ANC-Einheit aufweist, wobei die ANC-Einheit eine Feedforward-Einheit aufweist, welche ein Feedforward-Signal ausgibt, zur Unterdrückung von äußeren Störgeräuschen, welche von außen in einen Gehörgang eines Nutzers des Hörgeräts eindringen, wobei die ANC-Einheit eine Feedback-Einheit aufweist, welche ein Feedback-Signal ausgibt, zur Unterdrückung von inneren Störgeräuschen, welche innerhalb des Gehörgangs vorliegen, wobei das Hörgerät eine Signalverarbeitungseinheit aufweist, welche eine einstellbare Verstärkung aufweist und welche ein Eingangssignal des Hörgeräts verstärkt und als verstärktes Signal ausgibt, wobei das Feedback-Signal als Maß für die eigenen Stimme des Nutzers verwendet wird und die Verstärkung der Signalverarbeitungseinheit abhängig von dem Feedback-Signal und somit auch abhängig von der eigenen Stimme eingestellt wird. wobei die Verstärkung der Signalverarbeitungseinheit abhängig von dem Feedback-Signal eingestellt wird, sodass das Eingangssignal abhängig vom Feedback-Signal verstärkt wird. Für dieses Verfahren gelten die obigen Ausführungen analog und vorteilhafte Ausgestaltungen, Weiterbildungen und Varianten ergeben sich aus dem bereits Gesagten.

Nachfolgend werden Ausführungsbeispiele der Erfindung anhand einer Zeichnung näher erläutert. Darin zeigen jeweils schematisch:
Fig. 1 ein Hörgerät,
Fig. 2 das Hörgerät aus Fig. 1 beim bestimmungsgemäßen Gebrauch.

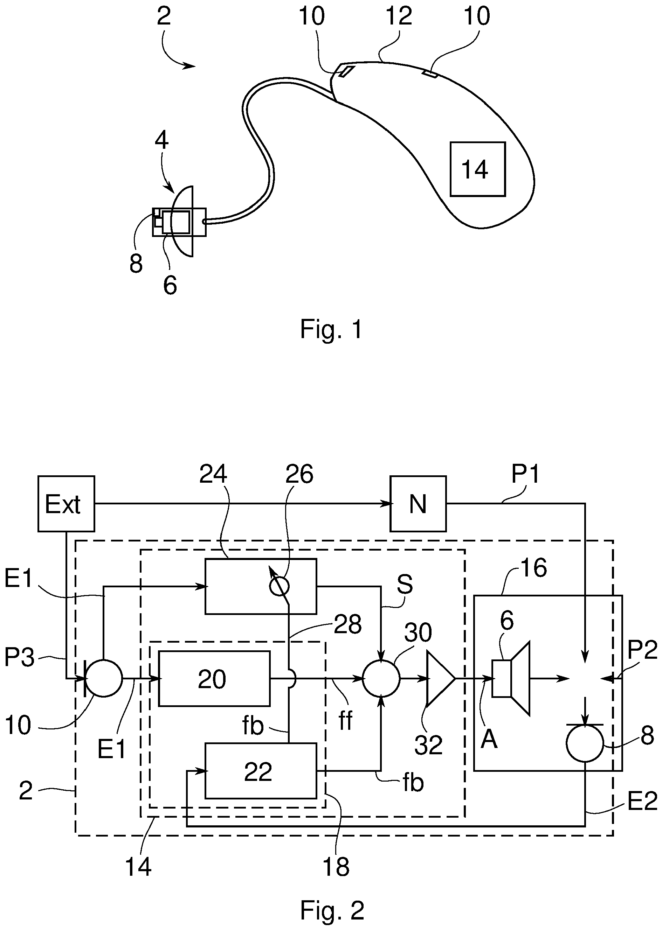

In Fig. 1 ist ein Hörgerät 2 gezeigt, mit einem Ohrstück 4, einem Hörer 6, einem inneren Mikrofon 8, zumindest einem, hier zwei äußeren Mikrofonen 10, einem Gehäuse 12 und einer Steuereinheit 14. Fig. 2 zeigt das Hörgerät 2 und dessen Verschaltung genauer und in einer anderen Ansicht, wobei aber nur eines der beiden äußeren Mikrofone 10 dargestellt ist. Zusätzlich zeigt Fig. 2 einen Gehörgang 16 eines Nutzers des Hörgeräts 2 sowie drei Pfade P1, P2, 3, über welche die eigene Stimme des Nutzers in den Gehörgang 16 gelangen kann. Bei bestimmungsgemäßem Gebrauch des Hörgeräts z.B. wie in Fig. 2 dargestellt, trägt der Nutzer das Hörgerät 2 im oder am Ohr. Bei hier gezeigten Hörgerätetyp trägt der Nutzer das Gehäuse 12 am Ohr, genauer gesagt hinter dem Ohr, und das Ohrstück 4 im Ohr. Die hier beschriebenen Konzepte sind auch gleichermaßen auf andere Hörgerätetypen anwendbar. Nachfolgend wird anhand der Fig. 1 und 2 auch ein Verfahren zum Betrieb des Hörgeräts 2 beschrieben, speziell beim bestimmungsgemäßen Gebrauch des Hörgeräts 2. Vorliegend ist die Steuereinheit 14 ausgebildet, das Verfahren auszuführen.

Das Hörgerät 2 weist eine ANC-Einheit 18 auf, wobei unter ANC eine aktive Geräuschunterdrückung verstanden wird, auch als "active noise cancellation" bezeichnet. Die ANC-Einheit 18 weist eine Feedforward-Einheit 20 auf, welche ein Feedforward-Signal ff ausgibt, zur Unterdrückung von äußeren Störgeräuschen, welche beim bestimmungsgemäßen Gebrauch über den äußeren Pfad P1 von außen in den Gehörgang 16 eindringen, speziell auch am Ohrstück 4 vorbei. Weiter weist die ANC-Einheit 18 eine Feedback-Einheit 22 auf, welche ein Feedback-Signal fb ausgibt, zur Unterdrückung von inneren Störgeräuschen, welche innerhalb des Gehörgangs 16 vorliegen. Innere Störgeräusche sind insbesondere z.B. stehende Wellen im Gehörgang 16 aufgrund einer Okklusion sowie vom Nutzer selbst verursachte Geräusche, sogenannte Eigengeräusche, darunter auch die eigene Stimme des Nutzers, welche über den inneren Pfad P2 als Körperschall in den Gehörgang 16 übertragen wird. Die Feedback-Einheit 22 wird auch als AOR-Einheit bezeichnet, da diese effektiv eine AOR durchführt, d.h. eine aktive Okklusionsreduktion, auch als "active occlusion reduction" bezeichnet. Das Feedforward-Signal ff und das Feedback-Signal fb werden allgemein jeweils auch als Korrektursignal fb, ff bezeichnet. Beide Korrektursignale fb, ff sind elektrische Signale, welche dem Hörer 6 zugeführt werden und von diesem in Schall umgewandelt werden. Dieser Schall ist dann sogenannter Anti-Schall, welcher die Störgeräusche bei Überlagerung im Gehörgang 16 ganz oder teilweise auslöscht, d.h. unterdrückt. Eine Geräuschunterdrückung erfolgt hierbei rein akustisch und gerade nicht auf elektrischer Ebene.

Da die ANC-Einheit 18 sowohl eine Feedforward-Einheit 20 als auch eine Feedback-Einheit 22 aufweist, wird die ANC-Einheit 18 auch als hybride ANC-Einheit 18 bezeichnet, welche entsprechend eine hybride ANC durchführt. Dabei werden Störgeräusche unterschiedlicher Herkunft unterdrückt, nämlich einerseits innere Störgeräusche und andererseits äußere Störgeräusche. Die Feedback-Einheit 22 und die Feedforward-Einheit 20 werden wie aus Fig. 2 erkennbar ist parallel zueinander betrieben und sind jeweils eigenständige Untereinheiten der ANC-Einheit 18. Außerdem erhalten die Feedforward-Einheit 20 und die Feedback-Einheit 22 voneinander unabhängige Eingangssignale E1, E2 und geben jeweils ein eigenes Korrektursignal fb, ff aus.

Das Hörgerät 2 dient allgemein der Ausgabe von Geräuschen an einen Nutzer und speziell zum Ausgleich eines Hördefizits eines hier hörgeschädigten Nutzers. Das Hörgerät 2 weist eine Signalverarbeitungseinheit 24 auf, welche eine einstellbare Verstärkung 26 aufweist, d.h. eine Verstärkungseinheit mit einem einstellbaren Verstärkungsfaktor. Die Signalverarbeitungseinheit 24 verstärkt ein Eingangssignal E1 des Hörgeräts 2 und gibt dieses als verstärktes Signal S aus. Das Eingangssignal E1 ist ein elektrisches Signal und wird mittels zumindest einem der äußeren Mikrofone 10 erzeugt. Die Signalverarbeitungseinheit 24 und deren einstellbare Verstärkung 26 realisieren beim bestimmungsgemäßen Gebrauch des Hörgeräts 2 dessen eigentliche Hörgerätefunktionalität, nämlich eine Modifikation des Eingangssignals E1 abhängig von einem individuellen Hörprofil, auch Audiogramm, des Nutzers.

Das verstärkte Signal S und auch die beiden Korrektursignale fb, ff werden über den Hörer 6 ausgegeben. Der Hörer 6 wandelt dabei das verstärkte Signal S und die beiden Korrektursignale fb, ff in Schall um. Die Korrektursignale fb, ff sind von der ANC-Einheit 18 derart erzeugt worden, dass die zugehörigen Schallsignale sich im Gehörgang 16 mit den Störgeräuschen destruktiv überlagern, wodurch die Störgeräusche unterdrückt werden.

Die Signalverarbeitungseinheit 24 und die ANC-Einheit 18 sind im gezeigten Ausführungsbeispiel Teile der Steuereinheit 14 des Hörgeräts 2. Die Steuereinheit 14 ist hier im Gehäuse 12 integriert, welches beim bestimmungsgemäßen Gebrauch je nach Hörgerätetyp vom Nutzer am oder im Ohr getragen wird.

Vorliegend wird das Feedback-Signal fb als Maß für die eigenen Stimme des Nutzers verwendet und die Verstärkung 26 der Signalverarbeitungseinheit 24 wird abhängig von dem Feedback-Signal fb und somit auch abhängig von der eigenen Stimme eingestellt, sodass auch das Eingangssignal E1 abhängig vom Feedback-Signal fb und somit auch abhängig von der eigenen Stimme verstärkt wird. Entsprechend ist in dem Hörgerät 2 ein Signalpfad 28 ausgebildet, welcher von der Feedback-Einheit 22 zur Signalverarbeitungseinheit 24 führt und über welchen in Fig. 2 direkt das Feedback-Signal fb oder in einer nicht gezeigten Alternative ein davon abgeleitetes Signal der Signalverarbeitungseinheit 24 zugeführt wird, um diese entsprechend abhängig vom Feedback-Signal fb anzusteuern. Die Verstärkung 26 und die Geräuschunterdrückung durch die ANC-Einheit 18 sind demnach miteinander gekoppelt und somit synchronisiert, d.h. eine Änderung im Betrieb der ANC-Einheit 18 wird genutzt um auch den Betrieb der Signalverarbeitungseinheit 24 zu ändern. Die Signalverarbeitungseinheit 24 wird demnach mittelbar oder unmittelbar von der Feedback-Einheit 22 angesteuert, sodass die Verstärkung 24 abhängig vom Feedback-Signal fb eingestellt wird.

Der genannten Einstellung der Verstärkung 24 abhängig vom Feedback-Signal fb liegt die folgende Überlegung zugrunde: einerseits werden aufgrund der hybriden ANC im Gehörgang 16 mögliche äußere Störgeräusche bereits durch die Feedforward-Einheit 20 ganz oder zumindest teilweise unterdrückt, andererseits wird Schall im Gehörgang 16 für die Feedback-Einheit 22 aufgenommen, um eine AOR durchzuführen. Da die äußeren Störgeräusche nun unterdrückt werden, werden im Gehörgang 16 dann überwiegend oder sogar ausschließlich innere Störgeräusche aufgenommen. In Phasen eigener Sprechaktivität, d.h. sobald der Nutzer selbst spricht, wird dessen eigene Stimme zum einen nach außen in die Umgebung abgegeben und ist dann regelmäßig auch im Eingangssignal E1 enthalten, und wird zum anderen als Körperschall in den Gehörgang 16 übertragen und liegt dann dort als inneres Störgeräusch vor. Zugleich gelangt die eigene Stimme möglicherweise auch von außen in den Gehörgang 16 und liegt dann zusätzlich als äußeres Störgeräusch vor. Für die eigene Stimme existieren somit grundsätzlich drei Pfade P1, P2, P3 in den Gehörgang 16, wie in Fig. 2 erkennbar. Zwei der Pfade P1, P2, P3 sind akustische Pfade P1, P2, nämlich einmal von außen und einmal von innen in den Gehörgang 16. Der dritte Pfad P3 ist gemischt akustisch-elektrisch, nämlich von außen über das Mikrofon 10 in die Signalverarbeitung 24 und dann über den Hörer 6 in den Gehörgang 16.

In Fig. 2 ist beispielhaft ein externes Signal Ext dargestellt, z.B. die eigene Stimme und/oder ein oder mehrere andere Umgebungsgeräusche, und zusätzlich Rauschen N als ein äußeres Störgeräusch. Sowohl das externe Signal Ext als auch das Rauschen N sind Schall, welche über den äußeren Pfad P1 am Ohrstück 4 vorbei in den Gehörgang 16 gelangen, und/oder über den Pfad P3 durch die Signalverarbeitung 24.

Aufgrund der Unterdrückung äußerer Störgeräusche durch die Feedforward-Einheit 20 wird vorliegend davon ausgegangen, dass die eigene Stimme nun einen wesentlichen Anteil der noch verbleibenden, inneren Störgeräusche bildet, sodass das Feedback-Signal fb als Maß für das Vorliegen der eigenen Stimme verwendbar ist oder sogar als Maß für die Lautstärke (auch: Pegel oder Amplitude) der eigenen Stimme. Dieses Maß wird nun auch tatsächlich zur Steuerung der Signalverarbeitungseinheit 24 verwendet, sodass diese im Ergebnis abhängig von der eigenen Stimme gesteuert wird, genauer gesagt: sodass die Verstärkung 26 abhängig von der eigenen Stimme eingestellt wird. Damit wird gezielt und zeitnah in Phasen eigener Sprechaktivität die Verarbeitung des Eingangssignals E1 in der Signalverarbeitung 24 angepasst und somit auch die Verarbeitung und letztendlich die Ausgabe der eigenen Stimme. Die eigene Stimme, welche über den inneren Pfad P2 als inneres Störgeräusch in den Gehörgang 16 gelangt, wird demnach genutzt, um die Verstärkung 26 der eigenen Stimme im akustisch-elektrischen dritten Pfad P3 anzupassen. Auf diese Weise wird die Verarbeitung der eigenen Stimme verbessert, hier speziell mit dem Ziel, eine natürlichere Wahrnehmung der eigenen Stimme zu erzielen oder diese zumindest derart auszugeben, dass diese vom Nutzer als weniger störend empfunden wird. Um dies zu erreichen unterdrückt die Feedforward-Einheit 20 im Falle einer eigenen Sprechaktivität des Nutzers die äußeren Störgeräusche derart, dass im Feedback-Signal fb überwiegend die eigene Stimme des Nutzers enthalten ist, sodass dann die Verstärkung 26 abhängig von der eigenen Stimme eingestellt wird. Insgesamt wird dann in Phasen eigener Sprechaktivität die eigene Stimme in allen drei Pfaden P1, P2, P3 unterdrückt, nämlich in den akustischen Pfaden P1, P2 mittels der ANC-Einheit 18 und synchron dazu im akustisch-elektrischen Pfad P3 mittels der Signalverarbeitungseinheit 24.

Vorliegend weist das Feedback-Signal fb eine Amplitude auf und mit steigender Amplitude wird die Verstärkung 24 reduziert. Dadurch wird bei lauterer eigener Stimme das Eingangssignal E1 weniger verstärkt und damit auch die eigene Stimme im Eingangssignal E1, sodass für den Nutzer potentiell die Wahrnehmung der eigenen Stimme verbessert wird. Dies hat hier zur Folge, dass die ANC-Einheit 18 die Verstärkung 24 unterschiedlich einstellt, je nachdem, ob der Nutzer selbst spricht oder nicht. In Phasen eigener Sprechaktivität ist die Amplitude größer als in Phasen ohne eigene Sprechaktivität, z.B. wenn lediglich andere Störgeräusche wie z.B. Rauschen N vorhanden sind. Dadurch wird in Phasen eigener Sprechaktivität die Verstärkung 24 geringer eingestellt als in Phasen ohne eigene Sprechaktivität und somit wird gezielt in Phasen eigener Sprechaktivität die Lautstärke der eigenen Stimme im Eingangssignal E1 reduziert, während in Phasen ohne eigene Sprechaktivität eine größere Verstärkung 24 eingestellt wird, um eine möglichst optimale Verständlichkeit von Geräuschen aus der Umgebung zu realisieren.

Wie aus den bisherigen Ausführungen deutlich wird, ist es grundsätzlich möglich, aufgrund der Unterdrückung von äußeren Störgeräuschen mittels des Feedforward-Signals ff dann Phasen eigener Sprechaktivität anhand des Feedback-Signals fb zu identifizieren, beispielsweise wenn das Feedback-Signal fb einen vordefinierten Schwellwert überschreitet. Daher wird im gezeigten Ausführungsbeispiel anhand des Feedback-Signals fb, genauer anhand dessen Amplitude, zwischen Phasen eigener Sprechaktivität und Phasen ohne eigene Sprechaktivität unterschieden, sodass mittels der ANC-Einheit 18 zugleich eine Eigenstimmenerkennung durchgeführt wird. Die ANC-Einheit 18 wird somit zur Eigenstimmendetektion verwendet und stellt insofern auch eine OVD-Einheit dar, d.h. eine Eigenstimmenerkennungseinheit, wobei OVD für "own voice detection" steht. Vorliegend wird oberhalb eines vordefinierten Schwellwerts für die Amplitude eine Phase eigener Sprechaktivität angenommen und unterhalb des Schwellwert analog eine Phase ohne eigene Sprechaktivität.

Grundsätzlich ist auch denkbar, die eigene Stimme z.B. mittels eines räumlichen Filters oder eines Richtmikrofons aufzunehmen, d.h. gezielt Schall aus einer bestimmten Richtung aufzunehmen und dann davon auszugehen, dass es sich hierbei aufgrund der Richtung um die eigene Stimme handelt. Die hier beschriebene Eigenstimmendetektion stellt diesbezüglich eine Alternative dar. Gemäß der hier dargestellten Lösung erfüllt die ANC-Einheit 18 sozusagen eine Doppelfunktion, nämlich zum einen eine aktive Geräuschunterdrückung und zum anderen eine Eigenstimmendetektion. Eine separate OVD-Einheit ist somit entbehrlich und im gezeigten Ausführungsbeispiel auch nicht vorhanden.

Die ANC-Einheit 18, speziell in deren Funktion als OVD-Einheit, wird dann zum Einstellen der Verstärkung 26 verwendet, um diese in Phasen eigener Sprechaktivität zu reduzieren und dadurch das Eingangssignal E1 und wenigstens die darin enthaltene eigene Stimme abzuschwächen. Darüber hinaus bildet der hier gezeigten Ausgestaltung die ANC-Einheit 18 in Kombination mit der Signalverarbeitungseinheit 24 eine nicht explizit bezeichnete OVP-Einheit, wobei OVP für "own voice processing" steht, d.h. Eigenstimmenverarbeitung. Die OVP-Einheit erkennt einerseits die eigene Stimme anhand des Feedback-Signals fb der Feedback-Einheit 22 und verarbeitet andererseits abhängig davon die eigene Stimme mittels der Signalverarbeitungseinheit 24, da ja deren Verstärkung 26 abhängig vom Feedback-Signal fb eingestellt wird. Eine separate OVP-Einheit ist dann nicht mehr notwendig und im gezeigten Ausführungsbeispiel auch nicht vorhanden.

Optional wird die Verstärkung 26 frequenzabhängig eingestellt, nämlich lediglich in solchen Frequenzbereichen, in welchen die eigene Stimme liegt. Auf diese Weise wird im Eingangssignal E1 gezielt die eigene Stimme modifiziert, mit dem Ziel einer möglichst natürlichen Ausgabe der eigenen Stimme an den Nutzer.

Die Feedback-Einheit 22 weist in einer optionalen Ausgestaltung einen Arbeitsbereich auf, welcher lediglich Frequenzen bis zu einer Grenzfrequenz umfasst, welche insbesondere vordefiniert ist und z.B. in einem nicht explizit gezeigten Speicher des Hörgeräts 2 hinterlegt ist. Die Grenzfrequenz beträgt beispielsweise 1 kHz. Die Verstärkung 26 wird dann auch für Frequenzen oberhalb der Grenzfrequenz abhängig vom Feedback-Signal fb eingestellt. Mit anderen Worten: die Steuerung der Verstärkung 26 beschränkt sich gerade nicht lediglich auf solche Bereiche, welche auch von der Feedback-Einheit 22 erfasst werden. Dem liegt die Überlegung zugrunde, dass Sprache allgemein nicht auf niedrige Frequenzen beschränkt ist. Eine ANC-Einheit 18 ist jedoch üblicherweise lediglich für solche niedrigen Frequenzen ausgelegt, da hier die meisten Störgeräusch zu erwarten sind und gerade Sprache, vor allem eine fremde Stimme, grundsätzlich eher nicht als Störgeräusch angesehen wird und auch nicht unbedingt unterdrückt werden soll. Gerade im Falle der eigenen Stimme ist eine Unterdrückung jedoch für eine natürlichere Wahrnehmung wünschenswert. Daher wird dann ausgenutzt, dass bei einem Arbeitsbereich bis zu einer bestimmten Grenzfrequenz, z.B. 1 kHz, noch zumindest Teile der eigenen Stimme von der Feedback-Einheit 22 erfasst werden, sodass das Feedback-Signal fb trotzdem als hinreichendes Maß für das Vorliegend oder die Lautstärke der eigenen Stimme und somit zur Eigenstimmendetektion verwendbar ist. Eine Unterdrückung der eigenen Stimme erfolgt dann auch auf denjenigen Frequenzen, welche von der eigenen Stimme umfasst sind, jedoch nicht vom Arbeitsbereich der Feedback-Einheit 22, um eine möglichst optimale Verarbeitung der eigenen Stimme in der Signalverarbeitungseinheit 24 zu erzielen und auf diese Weise einen natürlicheren Klang der eigenen Stimme zu erzeugen.

Wie bereits angedeutet weist das Hörgerät 2 zumindest ein Mikrofon 10 auf, mit welchem das Eingangssignal E1 erzeugt wird. Dieses Mikrofon 10 ist hier ein äu-ßeres Mikrofon. Das entsprechende Eingangssignal E1 wird im gezeigten Ausführungsbeispiel sowohl der Signalverarbeitungseinheit 24 als auch der Feedforward-Einheit 20 zugeführt. Unter einem "äußeren" Mikrofon 10 wird ein Mikrofon 10 verstanden, welches beim bestimmungsgemäßen Gebrauch des Hörgeräts 2 derart positioniert ist, dass von dem Mikrofon 10 ausschließlich oder überwiegend Schall aus der Umgebung des Nutzers aufgenommen wird. Hierzu ist das äußere Mikrofon 10 generell nach außen gerichtet und typischerweise auch z.B. wie in Fig. 2 gezeigt außerhalb des Gehörgangs 16 des Nutzers positioniert. In einer nicht gezeigten Alternative wird das Eingangssignal E1 für die Feedforward-Einheit 20 mittels eines anderen, zusätzlichen Mikrofons des Hörgeräts 2 erzeugt, sodass zwei Eingangssignale E1 erzeugt werden, eines für die Signalverarbeitungseinheit 24 und eines für die Feedforward-Einheit 20.

Auch die Feedback-Einheit 22 erhält ein Eingangssignal E2, welches mittels eines Mikrofons 8 des Hörgeräts 2 erzeugt wird. Allerdings unterscheiden sich die Eingangssignale E1, E2 für die Feedforward-Einheit 20 und die Feedback-Einheit 22, da diese Einheiten ja unterschiedliche Störgeräusche unterdrücken sollen, sodass die Mikrofone 8, 10 entsprechend unterschiedlich positioniert sind. Das zuvor beschriebene Eingangssignal E1 für die Signalverarbeitungseinheit 24 und die Feedforward-Einheit 20 wir dann auch als erstes Eingangssignal E1 bezeichnet. Das innere Mikrofon 8 erzeugt dann ein zweites Eingangssignal E2, welches der Feedback-Einheit 22 zugeführt wird, um das Feedback-Signal fb zu erzeugen. Im Gegensatz zu einem äußeren Mikrofon 10 wird unter einem "inneren" Mikrofon 8 ein Mikrofon verstanden, welches beim bestimmungsgemäßen Gebrauch des Hörgeräts 2 derart z.B. wie in Fig. 2 gezeigt positioniert ist, dass von dem Mikrofon 8 ausschließlich oder überwiegend Schall aus dem Gehörgang 16 des Nutzers aufgenommen wird. Hierzu ist das innere Mikrofon 8 typischerweise nach innen und in den Gehörgang 16 hinein gerichtet und/oder innerhalb des Gehörgangs 16 des Nutzers positioniert.

Die Grenze zwischen "innen" und "außen" wird vorliegend durch das Ohrstück 4 des Hörgeräts 2 definiert, welches beim bestimmungsgemäßen Gebrauch im Gehörgang 16 einsitzt und in diesem ein Volumen begrenzt, welches dann innen liegt und durch das Ohrstück 4, die Gehörgangswand und das Trommelfell begrenzt ist.

Dieses Volumen ist in Fig. 2 als Gehörgang 16 angedeutet. Im Gegensatz dazu liegt die Umgebung auf der anderen Seite des Ohrstücks 4, nämlich außen. Die Ausgabe von Schall durch das Hörgerät 2 erfolgt in beiden Fällen nach innen hin, also in den Gehörgang 16 hinein.

Obwohl in der Darstellung der Fig. 2 der gestrichene Rahmen, welcher das Hörgerät 2 darstellt, und der Gehörgang 16 überlappen, ist der Gehörgang 16 selbstverständlich kein Teil des Hörgeräts 2. Der Überlapp in Fig. 2 ist lediglich ein Resultat der vereinfachten Darstellung.

Das hier gezeigte Hörgerät 2 ist zur geschlossenen Versorgung ausgebildet und weist hierzu das Ohrstück 4 auf, zum Abschließen des Gehörgangs 16 während des bestimmungsgemäßen Gebrauchs des Hörgeräts 2. Das Ohrstück 4 ist beispielsweise ein sogenannter Dome oder eine Otoplastik. In einer möglichen und hier nicht explizit gezeigten Ausgestaltung weist das Ohrstück 4 noch einen sogenannten Vent auf.

Im gezeigten Ausführungsbeispiel werden das modifizierte, d.h. verstärkte Signal S, das Feedback-Signal fb und das Feedforward-Signal ff miteinander zu einem Ausgangssignal A kombiniert, welches dann über den Hörer 6 ausgegeben wird. Vorliegend werden das modifizierte Signal S, das Feedback-Signal fb und das Feedforward-Signal ff in einem Summierer 30 miteinander addiert. Das Ausgangssignal A enthält dann einerseits das von der Signalverarbeitung 24 ausgegebene verstärkte Signal S sowie die Korrektursignale fb, ff zur Unterdrückung von Störgeräuschen. Zusätzlich wird das Ausgangssignal A noch mit einem Zusatzverstärker 32 des Hörgeräts 2 verstärkt, bevor das Ausgangssignal A über den Hörer 6 ausgegeben wird. Das modifizierte Signal, S das Feedback-Signal fb und das Feedforward-Signal ff werden demnach gemeinsam sozusagen nachverstärkt. Der Summierer 30 und der Zusatzverstärker 32 sind für das grundlegende Konzept der Steuerung der Signalverarbeitungseinheit 24 abhängig vom Feedback-Signal fb an sich nicht von Bedeutung und grundsätzlich unabhängig hiervon.

### Bezugszeichenliste

- 2: Hörgerät
- 4: Ohrstück
- 6: Hörer
- 8: inneres Mikrofon
- 10: äußeres Mikrofon
- 12: Gehäuse
- 14: Steuereinheit
- 16: Gehörgang
- 18: ANC-Einheit
- 20: Feedforward-Einheit
- 22: Feedback-Einheit
- 24: Signalverarbeitungseinheit
- 26: Verstärkung
- 28: Signalpfad
- 30: Summierer
- 32: Zusatzverstärker
- A: Ausgangssignal
- Ext: externes Signal
- E1: erstes Eingangssignal (vom äußeren Mikrofon)
- E2: zweites Eingangssignal (vom inneren Mikrofon)
- fb: Feedback-Signal, Korrektursignal
- ff: Feedforward-Signal, Korrektursignal
- N: Rauschen
- P1: äußerer Pfad (akustisch)
- P2: innerer Pfad (akustisch)
- P3: dritter Pfad (akustisch-elektrisch)
- S: Signal (modifiziert, verstärkt)

## Patentansprüche

1. Verfahren zum Betrieb eines Hörgeräts (2),
a. wobei das Hörgerät (2) eine ANC-Einheit (18) aufweist,
b. wobei die ANC-Einheit (18) eine Feedforward-Einheit (20) aufweist, welche ein Feedforward-Signal (ff) ausgibt, zur Unterdrückung von äußeren Störgeräuschen, welche von außen in einen Gehörgang (16) eines Nutzers des Hörgeräts (2) eindringen,
c. wobei die ANC-Einheit (18) eine Feedback-Einheit (22) aufweist, welche ein Feedback-Signal (fb) ausgibt, zur Unterdrückung von inneren Störgeräuschen, welche innerhalb des Gehörgangs (16) vorliegen,
d. wobei das Hörgerät (2) eine Signalverarbeitungseinheit (24) aufweist, welche eine einstellbare Verstärkung (26) aufweist und welche ein Eingangssignal (E1) des Hörgeräts (2) verstärkt und als verstärktes Signal (S) ausgibt,
e. wobei die Verstärkung (26) frequenzabhängig eingestellt wird, nämlich lediglich in solchen Frequenzbereichen, in welchen die eigene Stimme liegt,
**dadurch gekennzeichnet,**
f. **dass** das Feedback-Signal (fb) als Maß für die eigene Stimme des Nutzers verwendet wird und die Verstärkung der Signalverarbeitungseinheit abhängig von dem Feedback-Signal (fb) und somit auch abhängig von der eigenen Stimme eingestellt wird.

2. Verfahren nach Anspruch 1,
wobei im Falle einer eigenen Sprechaktivität des Nutzers die Feedforward-Einheit (20) die äußeren Störgeräusche derart unterdrückt, dass im Feedback-Signal (fb) überwiegend die eigene Stimme des Nutzers enthalten ist, sodass dann die Verstärkung (26) abhängig von der eigenen Stimme eingestellt wird.

3. Verfahren nach Anspruch 1 oder 2,
wobei das Feedback-Signal (fb) eine Amplitude aufweist und wobei mit steigender Amplitude die Verstärkung (26) reduziert wird.

4. Verfahren nach einem der Ansprüche 1 bis 3,
wobei anhand des Feedback-Signals (fb) zwischen Phasen eigener Sprechaktivität und Phasen ohne eigene Sprechaktivität unterschieden wird, sodass mittels der ANC-Einheit (18) zugleich eine Eigenstimmenerkennung durchgeführt wird.

5. Verfahren nach einem der Ansprüche 1 bis 4,
wobei die ANC-Einheit (18) in Kombination mit der Signalverarbeitungseinheit (24) eine OVP-Einheit bildet, welche einerseits die eigene Stimme anhand des Feedback-Signals (fb) der Feedback-Einheit (22) erkennt und andererseits abhängig vom Feedback-Signal (fb) die eigene Stimme mittels der Signalverarbeitungseinheit (24) verarbeitet.

6. Verfahren nach einem der Ansprüche 1 bis 5,
wobei die Feedback-Einheit (22) einen Arbeitsbereich aufweist, welcher lediglich Frequenzen bis zu einer Grenzfrequenz umfasst,
wobei die Verstärkung (26) jedoch auch für Frequenzen oberhalb der Grenzfrequenz abhängig vom Feedback-Signal eingestellt wird.

7. Verfahren nach einem der Ansprüche 1 bis 6,
wobei das Hörgerät (2) ein äußeres Mikrofon (10) aufweist, welches das Eingangssignal (E1) erzeugt, welches dann auch der Feedforward-Einheit (20) zugeführt wird, um das Feedforward-Signal (ff) zu erzeugen.

8. Verfahren nach einem der Ansprüche 1 bis 7,
wobei das Eingangssignal (E1) ein erstes Eingangssignal (E1) ist und wobei das Hörgerät (2) ein inneres Mikrofon (8) aufweist, welches ein zweites Eingangssignal (E2) erzeugt, welches der Feedback-Einheit (22) zugeführt wird, um das Feedback-Signal (fb) zu erzeugen.

9. Verfahren nach einem der Ansprüche 1 bis 8,
wobei das Hörgerät (2) zur geschlossenen Versorgung ausgebildet ist und hierzu ein Ohrstück (4) aufweist, zum Abschließen des Gehörgangs (169 während eines bestimmungsgemäßen Gebrauchs des Hörgeräts (2).

10. Verfahren nach einem der Ansprüche 1 bis 9,
wobei das verstärkte Signal (S), das Feedback-Signal (fb) und das FeedForward-Signal (ff) miteinander zu einem Ausgangssignal (A) kombiniert werden, welches dann über einen Hörer (6) des Hörgeräts (2) ausgegeben wird.

11. Verfahren nach Anspruch 10,
wobei das Ausgangssignal (A) mit einem Zusatzverstärker (32) des Hörgeräts (2) verstärkt wird, bevor das Ausgangssignal (A) über den Hörer (6) ausgegeben wird.

12. Hörgerät (2), welches eine ANC-Einheit (18), eine Signalverarbeitungseinheit (24) und eine Steuereinheit (14) aufweist,
a. wobei die ANC-Einheit (18) eine Feedforward-Einheit (20) und eine Feedback-Einheit (22) aufweist,
b. wobei die Steuereinheit (14) ausgebildet ist, ein Verfahren nach einem der Ansprüche 1 bis 11 auszuführen.

## Claims

1. Method for operating a hearing aid (2),
a. wherein the hearing aid (2) comprises an ANC unit (18),
b. wherein the ANC unit (18) comprises a feedforward unit (20), which outputs a feedforward signal (ff) for suppressing external interference noises entering an auditory canal (16) of a user of the hearing aid (2) from the outside,
c. wherein the ANC unit (18) comprises a feedback unit (22), which outputs a feedback signal (fb) for suppressing internal interference noises present within the auditory canal (16),
d. wherein the hearing aid (2) has a signal processing unit (24), which has an adjustable amplification (26) and which amplifies an input signal (E1) of the hearing aid (2) and outputs it as an amplified signal (S),
e. wherein the amplification (26) is set in dependence of the frequency, namely only in those frequency ranges, in which the user's own voice lies,
**characterized in**
f. **that** the feedback signal (fb) is used as a measure of the user's own voice and the amplification of the signal processing unit is set depending on the feedback signal (fb) and thus also depending on the own voice.

2. Method according to claim 1,
wherein, in the case of the user's own speech activity, the feedforward unit (20) suppresses the external interference noises in such a way that the user's own voice is predominantly contained in the feedback signal (fb), so that the amplification (26) is then set depending on the user's own voice.

3. Method according to claim 1 or 2,
wherein the feedback signal (fb) has an amplitude and wherein the amplification (26) is reduced with increasing amplitude.

4. Method according to one of claims 1 to 3,
wherein the feedback signal (fb) is used to differentiate between phases of own speech activity and phases without own speech activity, so that the ANC unit (18) is also used to recognize own voices.

5. Method according to one of claims 1 to 4,
wherein the ANC unit (18) in combination with the signal processing unit (24) forms an OVP unit, which on the one hand recognizes the own voice by means of the feedback signal (fb) of the feedback unit (22) and on the other hand processes the own voice by means of the signal processing unit (24) depending on the feedback signal (fb).

6. Method according to one of claims 1 to 5,
wherein the feedback unit (22) has an operating range, which only comprises frequencies up to a limiting frequency,
wherein the amplification (26) is also set for frequencies above the limiting frequency depending on the feedback signal.

7. Method according to one of claims 1 to 6,
wherein the hearing aid (2) comprises an external microphone (10), which generates the input signal (E1), which is then also supplied to the feedforward unit (20) to generate the feedforward signal (ff).

8. Method according to one of claims 1 to 7,
wherein the input signal (E1) is a first input signal (E1) and wherein the hearing aid (2) comprises an internal microphone (8), which generates a second input signal (E2), which is supplied to the feedback unit (22) to generate the feedback signal (fb).

9. Method according to one of claims 1 to 8,
wherein the hearing aid (2) is designed for closed fitting and has an earpiece (4) for this purpose, for closing off the auditory canal (16) during an intended use of the hearing aid (2).

10. Method according to one of claims 1 to 9,
wherein the amplified signal (S), the feedback signal (fb) and the feedforward signal (ff) are combined with one another to form an output signal (A), which is then output via a receiver (6) of the hearing aid (2).

11. Method according to claim 10,
wherein the output signal (A) is amplified by an additional amplifier (32) of the hearing aid (2) before the output signal (A) is output via the receiver (6).

12. Hearing aid (2) comprising an ANC unit (18), a signal processing unit (24) and a control unit (14),
a. wherein the ANC unit (18) comprises a feedforward unit (20) and a feedback unit (22),
b. wherein the control unit (14) is designed to carry out a method according to one of claims 1 to 11.

## Revendications

1. Procédé de fonctionnement d'un appareil auditif (2),
a. dans lequel l'appareil auditif (2) comprend une unité ANC (18),
b. dans lequel l'unité ANC (18) comprend une unité de renvoi (20), qui émet un signal de renvoi (ff) pour supprimer les bruits parasites extérieurs, qui pénètrent de l'extérieur dans un conduit auditif (16) d'un utilisateur de l'appareil auditif (2),
c. dans lequel l'unité ANC (18) comprend une unité de rétroaction (22), qui émet un signal de rétroaction (fb) pour supprimer les bruits parasites internes présents à l'intérieur du conduit auditif (16),
d. dans lequel l'appareil auditif (2) comporte une unité de traitement de signal (24), qui comprend une amplification réglable (26) et qui amplifie un signal d'entrée (E1) de l'appareil auditif (2) et le délivre sous forme de signal amplifié (S),
e. dans lequel l'amplification (26) est réglée en fonction de la fréquence, à savoir uniquement dans les plages de fréquences dans lesquelles se trouve la propre voix,
**caractérisé en ce**
f. **que** le signal de rétroaction (fb) est utilisé comme mesure de la propre voix de l'utilisateur et l'amplification de l'unité de traitement de signal est réglée en fonction du signal de rétroaction (fb) et donc également en fonction de la propre voix.

2. Procédé selon la revendication 1,
dans lequel, dans le cas d'une activité vocale propre de l'utilisateur, l'unité de renvoi (20) supprime les bruits parasites extérieurs de telle sorte que le signal de rétroaction (fb) contienne principalement la propre voix de l'utilisateur, de sorte que l'amplification (26) soit alors réglée en fonction de la propre voix.

3. Procédé selon la revendication 1 ou 2,
dans lequel le signal de rétroaction (fb) comprend une amplitude et dans lequel l'amplification (26) est réduite lorsque l'amplitude augmente.

4. Procédé selon l'une des revendications 1 à 3,
dans lequel une distinction est faite, à l'aide du signal de rétroaction (fb), entre des phases d'activité vocale propre et des phases sans activité vocale propre, de sorte qu'une reconnaissance de voix propre est effectuée simultanément au moyen de l'unité ANC (18).

5. Procédé selon l'une des revendications 1 à 4,
dans lequel l'unité ANC (18) forme, en combinaison avec l'unité de traitement de signal (24), une unité OVP, qui, d'une part, reconnaît la propre voix à l'aide du signal de rétroaction (fb) de l'unité de rétroaction (22) et, d'autre part, traite la propre voix en fonction du signal de rétroaction (fb) au moyen de l'unité de traitement de signal (24).

6. Procédé selon l'une des revendications 1 à 5,
dans lequel l'unité de rétroaction (22) a une plage de fonctionnement, qui comprend uniquement des fréquences jusqu'à une fréquence de coupure, l'amplification (26) étant toutefois également réglée pour des fréquences supérieures à la fréquence limite en fonction du signal de rétroaction.

7. Procédé selon l'une des revendications 1 à 6,
dans lequel l'appareil auditif (2) comprend un microphone externe (10), qui génère le signal d'entrée (E1), qui est ensuite également fourni à l'unité de renvoi (20) pour générer le signal de renvoi (ff).

8. Procédé selon l'une des revendications 1 à 7,
dans lequel le signal d'entrée (E1) est un premier signal d'entrée (E1) et dans lequel l'appareil auditif (2) comprend un microphone interne (8), qui génère un deuxième signal d'entrée (E2), qui est fourni à l'unité de rétroaction (22) pour générer le signal de rétroaction (fb).

9. Procédé selon l'une des revendications 1 à 8,
dans lequel l'appareil auditif (2) est conçue pour une alimentation fermée et comprenant à cet effet une oreillette (4), pour fermer le conduit auditif (16) pendant une utilisation conforme de l'appareil auditif (2).

10. Procédé selon l'une des revendications 1 à 9,
dans lequel le signal amplifié (S), le signal de rétroaction (fb) et le signal de renvoi (ff) sont combinés les uns avec les autres pour former un signal de sortie (A), qui est ensuite émis par un écouteur (6) de l'appareil auditif (2).

11. Procédé selon la revendication 10,
dans lequel le signal de sortie (A) est amplifié par un amplificateur supplémentaire (32) de l'appareil auditif (2) avant que le signal de sortie (A) ne soit émis par l'écouteur (6).

12. Appareil auditif (2), qui comprend une unité ANC (18), une unité de traitement de signal (24) et une unité de commande (14),
a. dans lequel l'unité ANC (18) comprend une unité de renvoi (20) et une unité de rétroaction (22),
b. dans lequel l'unité de commande (14) est conçue pour exécuter un procédé selon l'une des revendications 1 à 11.
